(19) Europäisches Patentamt / European Patent Office / Office européen des brevets

(11) **EP 3 881 032 B1**

(12) **EUROPÄISCHE PATENTSCHRIFT**

(45) Veröffentlichungstag und Bekanntmachung des Hinweises auf die Patenterteilung:
**18.03.2026 Patentblatt 2026/12**

(21) Anmeldenummer: **19801730.3**

(22) Anmeldetag: **30.10.2019**

(51) Internationale Patentklassifikation (IPC):
**G01C 21/32** (2006.01)    **G06F 16/29** (2019.01)
**G01C 21/00** (2006.01)    **G06F 18/25** (2023.01)
**G08G 1/01** (2006.01)    **G08G 1/04** (2006.01)
**G08G 1/0968** (2006.01)    **G08G 1/14** (2006.01)

(52) Gemeinsame Patentklassifikation (CPC):
**G01C 21/3867; G01C 21/3807; G01C 21/3841; G06F 18/25; G08G 1/0112; G08G 1/0129; G08G 1/0141; G08G 1/04; G08G 1/096827; G08G 1/09685; G08G 1/143; G08G 1/147; G08G 1/148**

(86) Internationale Anmeldenummer:
**PCT/EP2019/079663**

(87) Internationale Veröffentlichungsnummer:
**WO 2020/099132 (22.05.2020 Gazette 2020/21)**

(54) **ERSTELLUNG UND AKTUALISIERUNG VON KARTEN IM OFF-STREET BEREICH**

CREATION AND UPDATING OF MAPS IN THE OFF-STREET AREA

ETABLISSEMENT ET MISE À JOUR DE CARTES DANS LA ZONE HORS RUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2018 DE 102018219220**

(43) Veröffentlichungstag der Anmeldung:
**22.09.2021 Patentblatt 2021/38**

(73) Patentinhaber: **Robert Bosch GmbH
70442 Stuttgart (DE)**

(72) Erfinder:
• **WOLF, Michael**
  **70563 Stuttgart (DE)**
• **ZIPS, Patrik**
  **1210 Wien (AT)**
• **MAIER, Manuel**
  **73732 Esslingen (DE)**
• **MATTHIES, Christian**
  **70191 Stuttgart (DE)**
• **BELEZNAI, Csaba**
  **1220 Wien (AT)**

(56) Entgegenhaltungen:
EP-A1- 2 825 902    EP-A1- 3 136 054
DE-A1- 102009 039 086    DE-A1- 102012 216 994
DE-T5- 112014 000 532

• **SCHWESINGER ULRICH ET AL: "Automated valet parking and charging for e-mobility", 2016 IEEE INTELLIGENT VEHICLES SYMPOSIUM (IV), IEEE, 19 June 2016 (2016-06-19), pages 157 - 164, XP032938958, DOI: 10.1109/IVS.2016.7535380**

**Beschreibung**

Die Erfindung betrifft ein Verfahren zum Erstellen einer Karte von mindestens einer Parkinfrastruktur durch eine Servereinheit, eine externe Servereinheit sowie ein System.

Stand der Technik

Crowd-sourced basierte Dienstleistungen im Bereich von Karten und Benutzerschnittstellen erlangen zunehmend an Relevanz in der Automobilindustrie. Diese Entwicklung entsteht beispielsweise aufgrund dem zunehmendem Einsatz von Sensoren in Fahrzeugen. Die derzeit bekannten Dienstleistungen, welche auf einem Crowd-sourcing-Ansatz basieren, zielen auf Einparkvorgänge, Erstellung von Reibwertkarten und Erstellung von Karten für hochautomatisierte Fahrfunktionen ab.

Bei diesen Dienstleistungen werden Sensordaten über die Fahrzeugsensorik von sogenannten Senderfahrzeugen gesammelt und an eine Servereinheit bzw. Cloud übertragen. Die Sensordaten werden anschließend zum Bereitstellen der Dienstleistungen verarbeitet. Fahrzeuge bzw. Autofahrer können auf die bereitgestellten Dienstleistungen zugreifen. Die Nutzer der Dienstleistungen werden als Empfängerfahrzeuge eingestuft.

Die bisherigen Lösungen in diesem Bereich sind hauptsächlich auf den sogenannten On-Street Bereich bezogen. Hierdurch kann die Position des Fahrzeugs zumeist präzise über GPS-Sensoren bestimmt und beispielsweise für eine Erstellung von Parkraumkarten von Straßenrandparkplätzen eingesetzt werden. Im sogenannten Off-Street Bereich ist der Einsatz von GPS-Sensoren regelmäßig nicht möglich, wodurch eine ortsgenaue Zuordnung von Sensordaten problematisch sein kann.

EP 3 136 054 A1 beschreibt ein Verfahren zum Generieren von Kartendaten durch einen Server, welcher Messdaten von mindestens einer mobilen Einheit empfängt. Die mobile Einheit ist als ein Fahrzeug oder ein tragbares Gerät ausgestaltet und kann Messdaten eines GNSS-Sensors, eines Odometriesensors oder eines Beschleunigungssensors sammeln. Basierend auf den Messdaten werden Pfadinformationen ermittelt. Zum Glätten der Pfadinformationen, werden Durchschnitte aus mehreren Pfadinformationen gebildet. Weiterer Stand der Technik ist aus DE 10 2012 216 994 A1 bekannt.

Offenbarung der Erfindung

Die der Erfindung zugrunde liegende Aufgabe kann darin gesehen werden, ein Verfahren zum Erstellen von Karten im Off-Street Bereich vorzuschlagen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zum Erstellen einer Karte von mindestens einer Parkinfrastruktur durch eine Servereinheit bereitgestellt. Unbelegte Parkplätze werden innerhalb der Parkinfrastruktur registriert, wobei von einer Fahrzeugsensorik mindestens eines Fahrzeugs ermittelte Pfadinformationen und Umgebungsinformationen durch die externe Servereinheit empfangen werden. Die Pfadinformationen werden normiert, wobei die zeitliche Information entfernt wird und normierte Pfadinformationen entstehen, welche in einer zweidimensionalen x-y-Ebene vorliegen, und in den normierten Pfadinformationen werden Punkte mit maximaler Krümmung ermittelt; die maximale Krümmung wird durch Scannen der Pfadinformationen mittels eines Kreises durchgeführt, wobei ein Pfad der Pfadinformation durch einen Kreismittelpunkt geführt wird und zwei Vektoren zwischen einem Eintrittspunkt des Pfads in den Kreis und dem Kreismittelpunkt und zwischen dem Kreismittelpunkt und einem Austrittspunkt des Pfads aus dem Kreis zum Ermitteln der maximalen Krümmung eingesetzt werden. Die Krümmung wird basierend auf dem Winkel zwischen den beiden Vektoren bestimmt. In einem weiteren Schritt werden die normierten Pfadinformationen an den Punkten maximaler Krümmung in Pfadabschnitte unterteilt, wobei die Pfadinformationen in näherungsweise lineare Pfadabschnitte unterteilt werden, welche durch die Punkte maximaler Krümmung begrenzt sind. Die Pfadabschnitte werden durch die externe Servereinheit zum Kompensieren von Fehlern entzerrt, und die entzerrten Pfadabschnitte werden zum Erstellen oder Aktualisieren einer geometrischen Karte der Parkinfrastruktur eingesetzt. Anhand der Umgebungsinformationen und anhand der entzerrten Pfadabschnitte werden belegte und unbelegte Parkplätze entlang des Pfads erfasst, um unbelegte Parkplätze innerhalb der Parkinfrastruktur zu ermitteln.

Nach einer vorteilhaften Ausgestaltung wird ein Verfahren zum Sammeln von Sensordaten durch mindestens ein Fahrzeug bereitgestellt. Das Fahrzeug weist ein

Steuergerät und eine Fahrzeugsensorik auf. Durch die Fahrzeugsensorik werden Sensordaten ermittelt, welche Pfadinformationen und Umgebungsinformationen eines Pfades des Fahrzeugs aufweisen. Die Pfadinformationen und die Umgebungsinformationen werden an eine externe Servereinheit gesendet. Gemäß einer vorteilhaften Ausgestaltung wird ein Steuergerät zum Empfangen und Auswerten von Sensordaten einer Fahrzeugsensorik bereitgestellt, wobei das Steuergerät dazu eingerichtet ist, das Verfahren zum Sammeln von Sensordaten auszuführen.

Nach einem weiteren Aspekt der Erfindung wird eine externe Servereinheit bereitgestellt, wobei die externe Servereinheit dazu eingerichtet ist, alle Schritte des Verfahrens zum Erstellen einer Karte von mindestens einer Parkinfrastruktur auszuführen.

Gemäß einem weiteren Aspekt der Erfindung wird ein System mit mindestens einem Fahrzeug und mit mindestens einer Servereinheit bereitgestellt. Das mindestens eine Fahrzeug weist eine Fahrzeugsensorik mit zumindest einem Umfeldsensor und mit zumindest einem Odometer auf. Das mindestens eine Fahrzeug weist ein Steuergerät auf, welches datenleitend mit der Fahrzeugsensorik verbunden ist und dazu eingerichtet ist, die Sensordaten der Fahrzeugsensorik auszuwerten.

Die Suche nach Parkplätzen verursacht insbesondere in Städten ein hohes Verkehrsaufkommen und kann die Zeit für eine zurückgelegte Route verlängern. Der entsprechende Parksuchverkehr kann in einen On-Street Bereich bzw. Straßenrand und einen Off-Street Bereich bzw. Parkhäuser unterteilt werden. Ein primärer Anwendungsfall des Community-based Parking lag bisher im innerstädtischen On-Street Bereich. Der Off-Street Bereich ist teilweise digitalisiert, sodass beispielsweise Belegungsdaten über Schrankensysteme, Kassenautomaten sowie entsprechender Sensorik ermittelt werden können.

Durch das Verfahren kann der Belegungszustand von Parkinfrastrukturen, wie beispielsweise Parkhäusern, Parkgaragen, Tiefgaragen und dergleichen, ermittelt und gleichzeitig eine Karte der Infrastruktur sowie der Belegungszustand der Parkinfrastruktur ermittelt werden. Insbesondere können statische und dynamische Infrastrukturdaten durch Sensordaten von Fahrzeugen bei einem Befahren der jeweiligen Infrastruktur ermittelt werden. Die statischen Infrastrukturdaten kann beispielsweise eine geometrische Formgebung der Infrastruktur aufweisen. Die dynamischen Infrastrukturdaten entsprechen einem sich verändernden Belegungszustand und können veränderliche Daten, wie beispielsweise Baustellen oder Sperrungen, aufweisen.

Durch die Verfahren zum Erstellen einer Karte von mindestens einer Parkinfrastruktur und zum Sammeln von Sensordaten durch mindestens ein Fahrzeug kann eine Installation und somit eine Vernetzung der Infrastruktur vor Ort entfallen. Hierdurch können die Kosten für den Aufbau und den Betrieb einer Parkinfrastruktur gesenkt werden. Insbesondere kann die Bereitstellung des Belegungszustands und der Parkinfrastrukturkarten durch einen Serviceprovider bereitgestellt werden. Es kann somit eine Schnittstelle zwischen einer Parkinfrastruktur und Autofahrern bereitgestellt werden. Eine derartige Lösung kann sich auch an Veränderungen, wie beispielsweise eine Neuerrichtung einer Parkinfrastruktur oder einen Ausbau einer Parkinfrastruktur, ohne zusätzlichen Aufwand anpassen.

Die jeweiligen Sensordaten über die statischen und dynamischen Informationen der Infrastruktur können durch Fahrzeugsensoren erlangt werden ohne einen Zugriff auf die Daten der Infrastruktur selbst, wie beispielsweise der Schrankensysteme, Bezahlsysteme, Bodensensoren oder Deckensensoren, zu haben.

Darüber hinaus kann das Verfahren auf die bereits für den On-Street Bereich festgelegten Datensätze bzw. Sensordaten aus Ultraschallsystemen zurückzugreifen.

Bei den Verfahren werden in einem ersten Schritt die durch Sensordaten ermittelten Pfadinformationen, welche von einer Zeit abhängen örtlich normalisiert. Hierdurch wird die zeitliche Information der Pfadinformationen entfernt, wodurch allein die zurückgelegten Koordinaten in einem zweidimensionalen Raum resultieren. Basierend auf den normalisierten Pfadinformationen werden Punkte mit maximaler

Krümmung bestimmt. Dies erfolgt durch ein Abtasten des gesamten Pfades.

Hierdurch werden die Abbiegevorgänge identifiziert. Diese Punkte maximaler Krümmung dienen als Schnittpunkte zum Unterteilen des Pfads in mehrere Pfadabschnitte. Hierdurch kann die weitere Bearbeitung bzw. Anpassung der Pfadinformationen erleichtert werden.

Anschließend erfolgt eine Entzerrung der Pfadabschnitte. Gleichzeitig kann eine Schleifenerkennung ausgeführt werden, da die Fahrzeuge eine Parkinfrastruktur üblicherweise an einem gleichen oder einem ähnlichen Ort befahren und wieder verlassen. Somit kann eine Parkhauseinfahrt als Start und Ziel der Pfade definiert werden. Die Entzerrung der Pfadabschnitte kann mit Hilfe einer räumlichen Transformation durchgeführt werden, wobei insbesondere Unregelmäßigkeiten und systematische Fehler von Odometriedaten, wie beispielsweise Radschlupf, kompensiert wird. Die Entzerrung kann dahingehend durchgeführt werden, dass der Startpunkt und der Zielpunkt des Pfades benachbart zueinander positioniert sind und somit im Wesentlichen eine geschlossene Schleife ausbilden. Hierdurch kann bereits eine geometrische Karte der Parkinfrastruktur erstellt werden.

Basierend auf den im Fahrzeug verbauten Sensoren kann das Umfeld des Fahrzeugs bei einem Befahren des Pfades innerhalb der Parkinfrastruktur abgetastet werden. Hierdurch können Umgebungsinformationen gewonnen werden, welche neben statischen Daten auch dynamische Daten, wie beispielsweise parkende Fahrzeuge, aufweisen. Hierdurch können die um Umfeld des Fahrzeugs angeordneten und stehenden Fahrzeuge identifiziert werden. Anhand der Dimensionen der Fahrzeuge können Parkplätze bestimmt werden, welche bereits belegt oder unbelegt sind. Somit kann eine Möglichkeit zur flexiblen und infrastrukturunabhängigen Ermittlung eines Belegungszustands einer Parkinfrastruktur bereitgestellt werden. Die Ermittlung des Belegungszustands kann alternativ oder zusätzlich im Rahmen einer Schleifenerkennung durchgeführt werden.

Die ermittelten freien und besetzten Parkplätze können in einem Speicher eines fahrzeuginternen Steuergeräts oder in einer fahrzeugexternen Servereinheit gemeinsam mit der geometrischen Karte der Parkinfrastruktur gespeichert werden. Die gespeicherten Daten werden anschließend anderen Verkehrsteilnehmern bereitgestellt oder weiterverarbeitet.

Erfindungsgemäß werden in den Pfadinformationen Punkte mit maximaler Krümmung ermittelt und die Pfadinformationen in näherungsweise lineare Pfadabschnitte unterteilt, welche durch die Punkte maximaler Krümmung begrenzt sind. Hierdurch kann jeder Pfad in definierte Pfadabschnitte unterteilt werden, wodurch eine weitere Auswertung und Optimierung der Pfadinformationen vereinfacht wird. Die jeweiligen Schritte, beispielsweise zum Entzerren oder Normalisieren der Pfadinformationen, können somit abschnittsweise berechnet bzw. durchgeführt werden.

Nach einer Ausführungsform wird eine Position einer Einfahrt der Parkinfrastruktur ermittelt, wobei die Pfadinformationen derart auf die Position der Einfahrt angeglichen werden, dass die Pfadinformationen an der Position der Einfahrt beginnen. Durch eine derartige Normalisierung bzw. Normierung der Sensordaten kann die Vergleichbarkeit der Sensormessdaten im Hinblick auf den zurückgelegten Pfad mehrerer Fahrzeuge hergestellt werden. Durch eine derartige Normierung können die Sensormessdaten mehrerer Fahrzeuge dazu eingesetzt werden, die Infrastrukturkarte und die Belegungskarte durch redundante Messungen mit einem höheren Präzisionsgrad zu erstellen. Die Normierung kann zeitlich und/oder örtlich erfolgen.

Insbesondere können die Positionen der Einfahrt und/oder der Ausfahrt aus der Parkinfrastruktur bestimmt und an eine absoluten bzw. redundant, beispielsweise durch GPS-Sensoren, ermittelten Positionen der Einfahrt und/oder Ausfahrt angeglichen werden. Die Positionsinformationen können hierbei entsprechend der Angleichung der Endpunkte, welche Einfahrtposition und Ausfahrtposition darstellen, ebenfalls angepasst werden.

Erfindungsgemäß wird die maximale Krümmung durch Scannen der Pfadinformationen mittels eines Kreises durchgeführt, wobei ein Pfad der Pfadinformation durch einen Kreismittelpunkt geführt wird und zwei Vektoren zwischen einem Eintrittspunkt des Pfads in den Kreis und dem Kreismittelpunkt und zwischen dem Kreismittelpunkt und einem Austrittspunkt des Pfads aus dem Kreis zum Ermitteln der maximalen Krümmung eingesetzt werden. Die Krümmung wird erfindungsgemäß basierend auf dem Winkel zwischen den beiden Vektoren bestimmt. Über eine gesamte Pfadlänge ermittelte Krümmung bildet an definierten Punkten, wie beispielsweise Kurven, Maxima aus, welche zum Unterteilen des Pfads in Pfadabschnitte einsetzbar sind.

Nach einer weiteren Ausführungsform wird die Entzerrung der Pfadabschnitte anhand von geometrischen Regelmäßigkeiten von mehreren Pfadinformationen durchgeführt, wobei die Punkte maximaler Krümmung als Abbiegepunkte mit einem Winkel definiert und zum Entzerren der Pfadabschnitte verwendet werden.

Die Verzerrung der Pfadinformationen kann insbesondere in Kurven entstehen, in welchen die Räder der Fahrzeuge ungleichmäßig drehen. Hierbei kann die Ausrichtung benachbarter Pfadabschnitte miteinander verglichen werden. Der Vergleich erfolgt im Hinblick auf orthogonale und parallele Anordnung der Pfadabschnitte zueinander, wodurch die Ausrichtung der Pfadabschnitte auf die geografischen Gegebenheiten des Umfelds angepasst korrigiert wird.

Gemäß einer weiteren Ausführungsform werden basierend auf den ermittelten belegten und unbelegten Parkplätzen entlang des Pfads des mindestens einen Fahrzeugs Wechsel einer Parkplatzebene bestimmt und in der Erstellung oder Aktualisierung der Karte berücksichtigt. Die Parkplätze und damit die mögliche Verteilung der Fahrzeuge innerhalb der Parkinfrastruktur sind üblicherweise regelmäßig auf den vertikalen Ebenen der Parkinfrastruktur ausgeprägt. Durch das Bestimmen derartiger Regelmäßigkeiten können Ebenenwechsel in den Umgebungsinformationen identifiziert und somit eine Höhenänderung im Pfadverlauf der Fahrzeuge ausgebildet werden.

Nach einer weiteren Ausführungsform werden die Pfadinformationen durch Odometriemessung des Fahrzeugs ermittelt. Da im Off-Street Bereich der Einsatz von GPS-Sensoren üblicherweise eingeschränkt ist, kann basierend auf Odometriedaten die durch Fahrzeuge zurückgelegte Strecke bzw. die Pfadinformation ermittelt werden. Hierdurch kann den Umgebungsinformationen eine räumliche relative Information zugeordnet werden.

Gemäß einem weiteren Ausführungsbeispiel werden ermittelte Umgebungsinformationen mehrerer Fahrzeugsensoren durch Berechnen von Ähnlichkeitsmaßen fusioniert. Hierdurch können Messungen bestätigt und Messunsicherheiten kompensiert werden. Beispielsweise kann zum Beurteilen von mehreren Umgebungsinformationen, wie beispielweise Position und Größe von parkenden Fahrzeugen, der Jaccard-Koeffizient ermittelt werden.

Nach einem weiteren Ausführungsbeispiel werden mehrere Pfadinformationen an Punkten maximaler Krümmung miteinander kombiniert. Die abschnittsweise Kombination der Pfadabschnitte kann präziser und schneller durchgeführt werden. Hierdurch kann die Genauigkeit der erstellten Karten der Parkinfrastruktur mit zunehmender Anzahl an Messungen durch Fahrzeuge erhöht werden.

Gemäß einer Ausgestaltung werden die ermittelte geografische Karte und die ermittelten freien Parkplätze zum Abrufen durch weitere Verkehrsteilnehmer bereitgestellt. Hierdurch können die Informationen im Rahmen von Dienstleistungen gespeichert und Empfängerfahrzeugen sowie Betreibern von Parkinfrastrukturen zur Verfügung gestellt werden.

Im Folgenden werden anhand von stark vereinfachten schematischen Darstellungen bevorzugte Ausführungsbeispiele der Erfindung näher erläutert. Hierbei zeigen

Fig. 1 eine schematische Darstellung eines Systems gemäß einer Ausführungsform,

Fig. 2 ein schematisches Diagramm zum Verdeutlichen einer räumlichen Normalisierung von Pfadinformationen,

Fig. 3 eine schematische Darstellung eines räumlich normalisierten und entzerrten Pfads zum Veranschaulichen von Punkten maximaler Krümmung,

Fig. 4 eine schematische Darstellung von einem Kreis zum Ermitteln einer Krümmung,

Fig. 5 ein schematisches Diagramm mit ermittelter Krümmung entlang mehrerer Pfade und die Position der Punkte maximaler Krümmung auf den räumlich normalisierten Pfaden.

Fig. 6-8 schematische Darstellungen zum Verdeutlichen der Funktionsweise einer Entzerrung von Pfadabschnitten,

Fig. 9 eine schematische Darstellung zum Vergleichen von Umgebungsinformationen mehrerer Sensoren,

Fig. 10 ein schematisches Diagramm zum Verdeutlichen einer räumlichen Normalisierung von Pfadinformationen, und

Fig. 11 Darstellungen zum Verdeutlichen der Kombination mehrerer ermittelter Pfade, welche abschnittsweise an den Punkten maximaler Krümmung miteinander kombiniert werden.

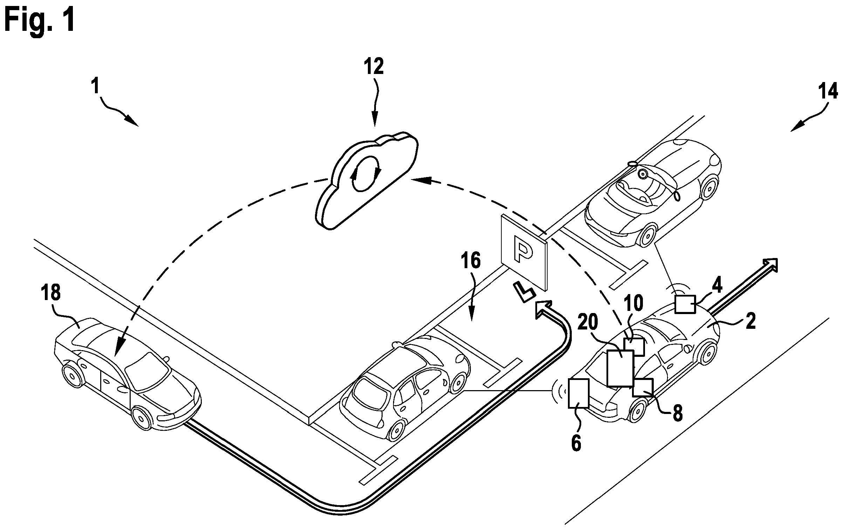

In der Figur 1 ist eine schematische Darstellung eines Systems 1 gemäß einer Ausführungsform gezeigt.

Das System 1 weist mindestens ein Fahrzeug 2 auf, welches als ein Sendefahrzeug ausgeführt ist und zum Sammeln von Sensordaten dient. Das Fahrzeug 2 weist gemäß dem Ausführungsbeispiel eine Fahrzeugsensorik mit zwei dargestellten Ultraschallsensoren 4, 6 auf. Des Weiteren weist das Fahrzeug 2 einen Odometer 8 auf, welcher zum Sammeln von Pfadinformationen dient. Die Fahrzeugsensorik kann darüber hinaus LIDAR-Sensoren, Radar-Sensoren, Kamera-Sensoren und dergleichen aufweisen.

Über eine Kommunikationseinheit 10 kann das Fahrzeug 2 mit einer externen Servereinheit 12 kommunizieren und die ermittelten Sensordaten übertragen. Die externe Servereinheit 12 kann basierend auf den übermittelten Sensordaten geometrische Karten und Belegungskarten einer Parkinfrastruktur 14 erstellen. In der Figur 1 ist beispielhaft eine On-Street Situation dargestellt, bei welcher ein freier Parkplatz 16 durch das Fahrzeug 2 ermittelt wurde. Der freie Parkplatz 16 wird über die externe Servereinheit 12 anderen Fahrzeugen 18, den sogenannten Empfängerfahrzeugen, bereitgestellt.

Das Fahrzeug 2 weist darüber hinaus ein Steuergerät 20 auf, welches dazu ausgestaltet, ist die Sensordaten der Ultraschallsensoren 4, 6 und des Odometers 8 auszulesen und zumindest temporär zwischen zu speichern. Je nach Ausgestaltung, kann das Steuergerät 20 die Sensordaten teilweise oder vollständig auswerten, bevor diese über die Kommunikationseinheit 10 an die Servereinheit 12 versendet werden.

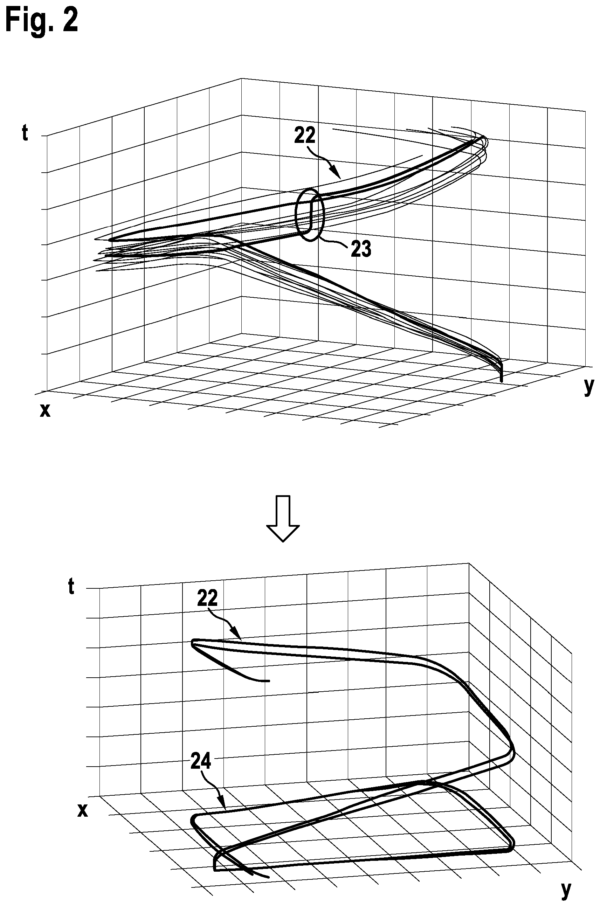

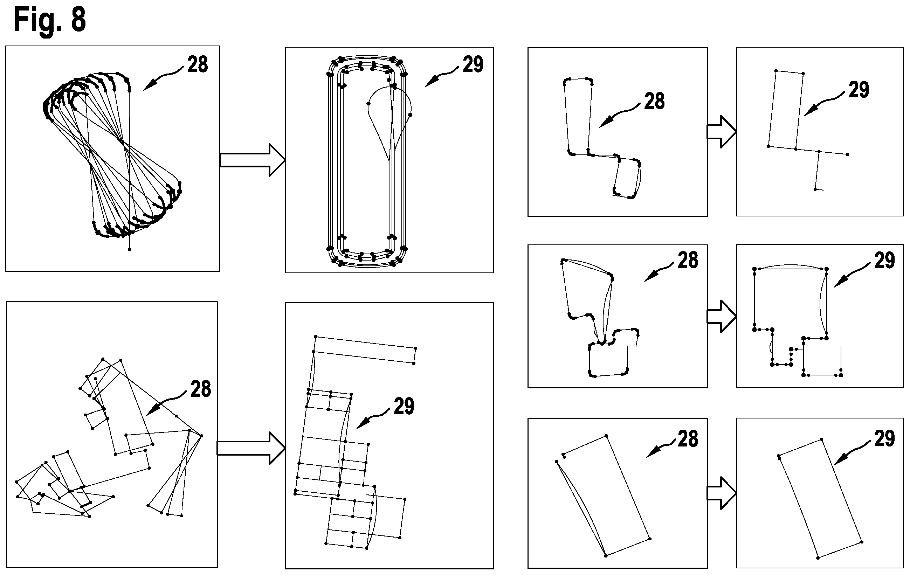

Im Folgenden werden die Figuren 2 bis 11 zum veranschaulichen eines erfindungsgemäßen Verfahrens beschrieben. Die jeweiligen Schritte des Verfahrens können nacheinander in der beschriebenen Reihenfolge oder unabhängig voneinander ausgeführt werden.

Die Figur 2 zeigt ein schematisches Diagramm zum Verdeutlichen einer räumlichen Normalisierung von Pfadinformationen 22, welche durch das Odometer 8 ermittelt wurden. Die ursprünglichen Pfadinformationen 22 liegen in Form von Koordinaten in einer x-y-Ebene vor und weisen eine zeitliche Information t, welche eine Höhe des jeweiligen Diagramms bestimmt. Die Pfadinformationen 22 werden in einem Schritt normiert, wodurch die zeitliche Information t entfernt wird. Hierdurch entstehen normierte Pfadinformationen, welche in der zweidimensionalen x-y-Ebene vorliegen.

Durch die Normierung können zeitliche Sprünge 23, welche beispielsweise durch ein Anhalten des Fahrzeugs 2 entstehen, kompensiert werden.

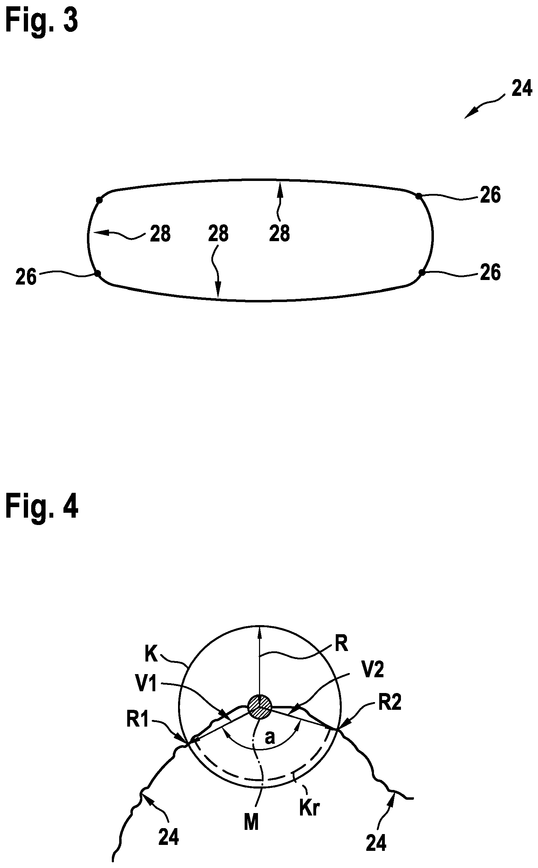

Ein weiterer Schritt des Verfahrens ist in der Figur 3 in einer schematischen Darstellung eines räumlich normalisierten und entzerrten Pfads 24 zum Veranschaulichen von Punkten 26 maximaler Krümmung Kr gezeigt. Die Punkte 26 dienen als Trennungspunkte zum Aufteilen des Pfads 24 in separate, näherungsweise gerade, Pfadabschnitte 28, welche an den Punkten 26 miteinander verbunden sind.

Die Figur 4 zeigt eine schematische Darstellung von einem Kreis K zum Ermitteln einer Krümmung Kr an beliebigen Positionen entlang des Pfads 24. Der Kreis K weist einen Mittelpunkt M auf, von welchem zwei Vektoren V1 und V2 zu einem Kreisrand R1, R2 zeigen. Die Punkte R1, R2 werden durch einen Eintrittspunkt R1 und einen Austrittspunkt R2 des Pfads 24 in und aus dem Kreis K bestimmt. Der Winkel a zwischen den beiden Vektoren V1, V2 kann durch den folgenden Zusammenhang zum Berechnen der Krümmung Kr verwendet werden:

$$Kr = 0{,}5 * (\cos{(a)} + 1)$$

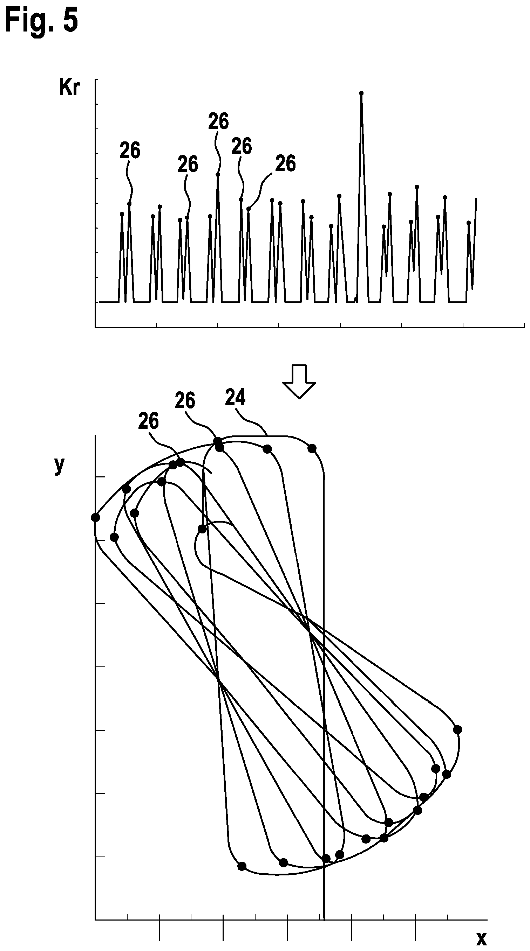

Basierend auf diesem Verhältnis können alle von Fahrzeugen 2 ermittelten Pfade 24 im Hinblick auf Punkte 26 maximaler Krümmung Kr gescannt werden. Neben der Präsenz entsprechender Maxima kann auch die Verteilung der Krümmungsmaxima relevant sein. Dies geht aus der Figur 5 hervor, welche ein schematisches Diagramm mit ermittelter Krümmung Kr entlang mehrerer Pfade 24 und die Position der Punkte 26 maximaler Krümmung Kr auf den räumlich normalisierten Pfaden 24 aufzeigt.

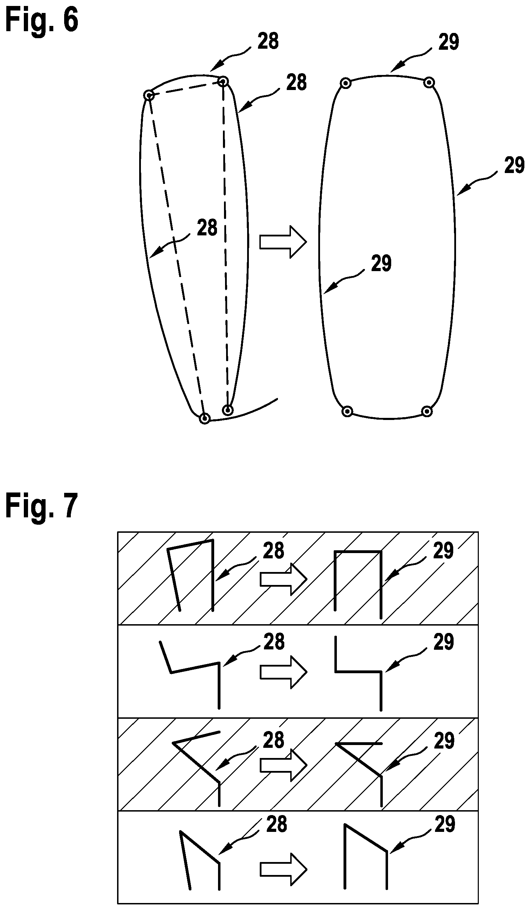

In den Figuren 6 - 8 werden schematische Darstellungen zum Verdeutlichen der Funktionsweise einer Entzerrung von Pfadabschnitten 28 illustriert. Die Entzerrung stellt einen weiteren möglichen Schritt des Verfahrens dar.

Aufgrund der Abhängigkeit des Odometers 8 von der Radumdrehung können derartige Odometer 8 bei Kurven messbare Abweichungen entwickeln, welche in einer verzerrten Darstellung der Pfade 24 resultiert. Zum Entzerren derartiger Abweichungen wird die Ausrichtung von jeweils mindestens zwei Pfadabschnitten 28 miteinander verglichen. Hierbei wird angenommen, dass die Pfadabschnitte 28 durch geometrische Regelmäßigkeiten, wie beispielsweise 90° Winkel, miteinander korrelieren. Sich gegenüberliegende Pfadabschnitte 28 sind üblicherweise parallel zueinander ausgerichtet. Anhand dieser Regelmäßigkeiten kann eine Korrektur der Ausrichtung der Pfadabschnitte 28 zueinander durchgeführt werden. Hieraus resultieren entzerrte bzw. korrigierte Pfadabschnitte 29. Dieser Vorgang wird durch die in den Figuren 6 - 8 gezeigten Beispiele verdeutlicht. Die Punkte stellen hierbei die jeweiligen Punkte 26 maximaler Krümmung Kr dar, welche die jeweiligen Pfadabschnitte 28, 29 endseitig begrenzen.

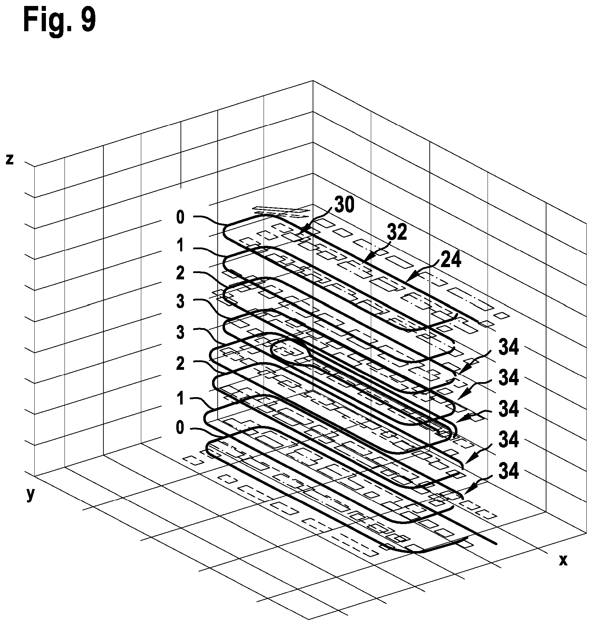

In Figur 9 ist eine schematische Darstellung zum Vergleichen von Umgebungsinformationen mehrerer Sensoren 4, 6 dargestellt. Gemäß dem Ausführungsbespiel werden linksseitig angeordnete Fahrzeuge bzw. Hindernisse 30 und rechtsseitig des Fahrzeugs 2 angeordnete Hindernisse 32 durch die Sensoren 4, 6 detektiert. Diese Hindernisse 30, 32 sind in dem Diagramm entlang eines Pfads 24 am jeweiligen Detektionsort dargestellt.

Hierbei wurden die entzerrten Pfadabschnitte 29 zu Schleifen 34 zusammengefasst. Basierend auf diesem Schritt können Regelmäßigkeiten im Hinblick auf die möglichen Parkplätze 16 basierend auf den detektierten Hindernissen 30, 32 festgestellt werden. Jede Schleife 34 bildet gemäß dem Ausführungsbeispiel eine Ebene z der Parkinfrastruktur 14. Die Verteilung der besetzten Parkplätze durch Hindernisse 32, 34 ist in dem Diagramm dargestellt.

Die jeweiligen Ebenen z der Parkinfrastruktur 14 können darüber hinaus durch Abschnitte mit durchgängiger oder ohne Hindernisse 30, 32 abgeschätzt werden.

Im Folgenden wird die Ermittlung der Regelmäßigkeiten und die Fusion der Umgebungsinformationen aus mehreren Messreihen bzw. aus mehreren Fahrten von Fahrzeugen 2 beschrieben.

Eine schleifenspezifische Regelmäßigkeit bzw. Signatur wird basierend auf den vorangegangenen Entzerrungsschritten ermittelt und kann beispielsweise die Verteilung der möglichen Parkplätze 16 aufweisen. Anhand der ermittelten Punkte 26 maximaler Krümmung Kr können die Pfade 24 in unterschiedliche geschlossene Schleifen 34 eingeteilt werden, welche jeweils aus mehreren Abschnitten 29 bestehen können.

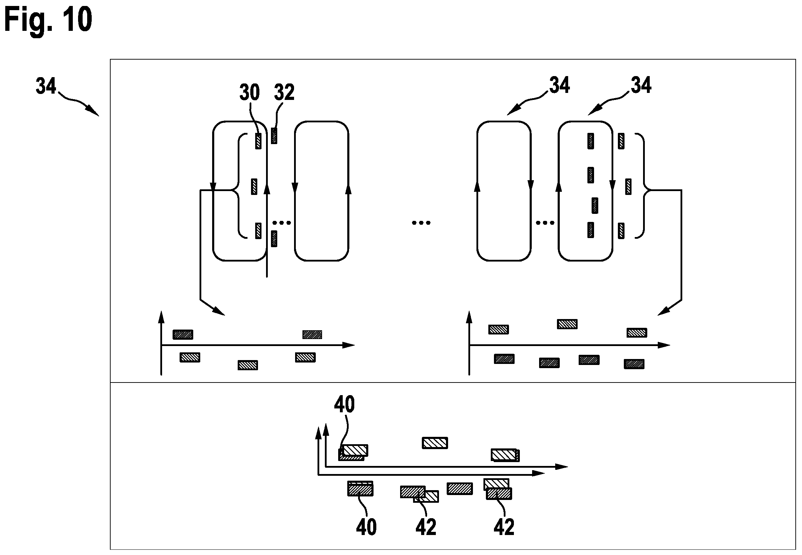

Die lokalen Maxima der Punkte 26 können hierbei die Eintrittspunkte 36 und Austrittspunkte 38 der jeweiligen Schleife 34 darstellen. Dies kann bei einer Vielzahl an Fahrten bzw. Pfadinformationen 24 durchgeführt werden, welche beispielhaft in der Figur 10 gezeigt sind. Es können hierbei alternativ oder zusätzlich individuelle schleifenspezifische Entzerrungen durchgeführt werden.

Die Hindernisse 30, 32 entlang einer Vielzahl an Pfadschleifen 34 können gesammelt und zum Erkennen von freien Parkplätzen 16 eingesetzt werden. Da die durch Hindernisse 30, 32 besetzten Parkplätze komplementär zu den freien Parkplätzen 16 ausgeprägt sind, reicht die Generierung einer Besetzung der Parkinfrastruktur 14, um eine Aussage über die freien Parkplätze 16 treffen zu können.

Für jedes erkannte Hindernis 30, 32 kann ein Platzhalter eingesetzt werden, welcher als Referenz für ein Fahrzeug oder für eine statische Ausgestaltung der Parkinfrastruktur 14, wie beispielsweise Säulen, dient. Aufgrund der ermittelten Distanz der Hindernisse 30, 32 zum messenden Fahrzeug 2 können die lateralen Abstände zwischen den Hindernissen 30, 32 ebenfalls berücksichtigt werden.

Das Zusammenführen von mehreren Messungen der Hindernisse 30, 32, welche durch unterschiedliche Sensoren 4, 6 oder durch unterschiedliche Fahrzeuge 2 ermittelt wurden, kann basierend auf der Ermittlung von einer sogenannten Intersection-over-Union-Einheit bzw. eines Jaccard-Koeffizienten erfolgen. Hierdurch können stark miteinander korrelierende Messergebnisse bzw. Hindernisse 40 bei der Generierung der Belegungskarte berücksichtigt werden. Andere Hindernisse 42, welche eine geringe Ähnlichkeit bzw. einen geringen Jaccard-Koeffizienten aufweisen, können entfernt werden.

Zum Durchführen der Zusammenführung können die jeweiligen Hindernisse 30, 32 in ein Diagramm, linear entlang einer Pfadlänge L eingetragen werden. Anschließend können die Hindernisse 30, 32 verschiedener Diagramme überlagert und miteinander verglichen werden. Diese Schritte werden durch die Figur 10 verdeutlicht.

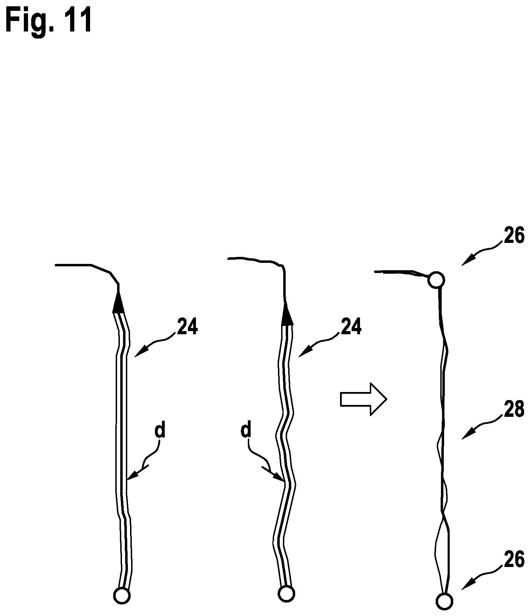

Die Figur 11 zeigt Darstellungen zum Verdeutlichen der Kombination mehrerer ermittelter Pfade 24, welche abschnittsweise an den Punkten 26 maximaler Krümmung Kr miteinander kombiniert werden. Die jeweiligen Pfade 24 wurden durch unterschiedliche Fahrzeuge 2 aufgezeichnet und an die Servereinheit 12 übermittelt. Nach der Ermittlung der Punkte 26 maximaler Krümmung Kr werden die jeweiligen Pfadabschnitte 28 einer Infrastruktur 14 in Ihrer Länge d aneinander angepasst. Anschließend können die jeweiligen Pfadabschnitte 28 überlagert oder gemittelt werden.

Die jeweiligen in den Figuren dargestellten Informationen und Pfade können durch eine oder mehrere Messungen von Fahrzeugen 2 ermittelt werden. Bei mehreren Messungen können die jeweiligen Informationen miteinander gekoppelt und somit vervollständig werden.

**Patentansprüche**

1. Verfahren zum Erstellen einer Karte von mindestens einer Parkinfrastruktur (14) durch eine Servereinheit (12), wobei unbelegte Parkplätze (16) innerhalb der Parkinfrastruktur (14) registriert werden, wobei

   - von einer Fahrzeugsensorik (4, 6, 8) mindestens eines Fahrzeugs (2) ermittelte Pfadinformationen (22) und Umgebungsinformationen (30) durch die Servereinheit (12) empfangen werden,
   - die Pfadinformationen (22) normiert werden, wobei die zeitliche Information (t) entfernt wird und normierte Pfadinformationen (22) entstehen, welche in einer zweidimensionalen x-y-Ebene vorliegen, und in den normierten Pfadinformationen (22) Punkte (26) mit maximaler Krümmung (Kr) ermittelt werden, wobei die maximale Krümmung (Kr) durch Scannen der Pfadinformationen (22) mittels eines Kreises (K) durchgeführt wird, wobei ein Pfad der Pfadinformation (22) durch einen Kreismittelpunkt (M) geführt wird und zwei Vektoren (V1, V2) zwischen einem Eintrittspunkt (R1) des Pfads in den Kreis (K) und dem Kreismittelpunkt (M) und zwischen dem Kreismittelpunkt (M) und einem Austrittspunkt (R2) des Pfads aus dem Kreis (K) zum Ermitteln der maximalen Krümmung (Kr) eingesetzt werden, wobei die Krümmung (Kr) basierend auf dem Winkel (a) zwischen den beiden Vektoren (V1, V2) bestimmt wird,
   - die normierten Pfadinformationen (22) an den Punkten (26) maximaler Krümmung (Kr) in Pfadabschnitte (24) unterteilt werden, wobei die Pfadinformationen (22) in näherungsweise lineare Pfadabschnitte (24) unterteilt werden, welche durch die Punkte (26) maximaler Krümmung (Kr) begrenzt sind,
   - die Pfadabschnitte (24) durch die externe Servereinheit (12) zum Kompensieren von Fehlern entzerrt werden und die entzerrten Pfadabschnitte (29) zum Erstellen oder Aktualisieren einer geometrischen Karte der Parkinfrastruktur (14) eingesetzt werden, und
   - anhand der Umgebungsinformationen (30, 32) und anhand der entzerrten Pfadabschnitte (29) belegte und unbelegte Parkplätze (16) entlang des Pfads erfasst werden, um unbelegte Parkplätze (16) innerhalb der Parkinfrastruktur (14) zu ermitteln.

2. Verfahren nach Anspruch 1, wobei eine Position einer Einfahrt (36) der Parkinfrastruktur (14), beispielsweise durch Messdaten von GPS-Sensoren, ermittelt wird und die Pfadinformationen (22) derart an die Position der Einfahrt (36) angeglichen werden, dass die Pfadinformationen (22) an der Position der Einfahrt (36) beginnen.

3. Verfahren nach einem der Ansprüche 1 oder 2, wobei die Entzerrung der Pfadabschnitte (28) anhand von geometrischen Regelmäßigkeiten von mehreren Pfadinformationen (22) durchgeführt wird, wobei die Punkte maximaler Krümmung (26) als Abbiegepunkte mit einem Winkel definiert und zum Entzerren der Pfadabschnitte (28) verwendet werden.

4. Verfahren nach einem der Ansprüche 1 bis 3, wobei basierend auf den ermittelten belegten und unbelegten Parkplätzen (16) entlang des Pfads (22) des mindestens einen Fahrzeugs (2) Wechsel einer Parkplatzebene bestimmt und in der Erstellung oder Aktualisierung der Karte berücksichtigt werden.

5. Verfahren nach einem der Ansprüche 1 bis 4, wobei mehrere Pfadinformationen (22) an Punkten maximaler Krümmung (26) miteinander kombiniert werden.

6. Verfahren nach einem der Ansprüche 1 bis 5, wobei die ermittelte geografische Karte und die ermittelten freien Parkplätze (16) zum Abrufen bereitgestellt werden.

7. Verfahren nach einem der Ansprüche 1 bis 6, wobei ermittelte Umgebungsinformationen (30, 32) mehrerer Fahrzeugsensoren (4, 6, 8) durch Berechnen von Ähnlichkeitsmaßen fusioniert werden.

8. Verfahren nach einem der Ansprüche 1 bis 7, wobei die Pfadinformationen (22) durch Odometriemessung (8) des Fahrzeugs (2) ermittelt werden.

9. Externe Servereinheit (12), wobei die externe Servereinheit (12) dazu eingerichtet ist, alle Schritte des Verfahrens gemäß einem der Ansprüche 1 bis 8 auszuführen.

10. System (1) mit mindestens einem Fahrzeug (2) und mit mindestens einer externen Servereinheit (12) gemäß Anspruch 9, wobei das Fahrzeug (2) eine Fahrzeugsensorik (4, 6, 8) mit zumindest einem Umfeldsensor (4, 6) und mit zumindest einem Odometer (8) aufweist und wobei das Fahrzeug (2) ein Steuergerät (20) zum Empfangen und Auswerten von Sensordaten der Fahrzeugsensorik (4, 6, 8) aufweist.

## Claims

1. Method for creating a map of at least one parking infrastructure (14) by means of a server unit (12), wherein empty parking spaces (16) within the parking infrastructure (14) are registered, wherein

   - path information (22) and environmental information (30) determined by a vehicle sensor system (4, 6, 8) of at least one vehicle (2) are received by the server unit (12),
   - the path information (22) is normalized, in which case the time information (t) is removed and normalized path information (22) which is present in a two-dimensional x-y plane is generated, and points (26) with maximum curvature (Kr) are determined in the normalized path information (22), where the maximum curvature (Kr) is carried out by scanning the path information (22) by means of a circle (K), where a path of the path information (22) is guided through a centre of a circle (M) and two vectors (V1, V2) between an entry point (R1) of the path into the circle (K) and the centre of the circle (M) and between the centre of the circle (M) and an exit point (R2) of the path from the circle (K) are used to determine the maximum curvature (Kr), where the curvature (Kr) is determined based on the angle (a) between the two vectors (V1, V2),
   - the normalized path information (22) is divided into path sections (24) at the points (26) of maximum curvature (Kr), the path information (22) being divided into approximately linear path sections (24) bounded by the points (26) of maximum curvature (Kr),
   - the path sections (24) are equalized by the external server unit (12) in order to compensate for errors and the equalized path sections (29) are used to create or update a geometric map of the parking infrastructure (14), and
   - occupied and empty parking spaces (16) along the path are recorded on the basis of the environmental information (30, 32) and the equalized path sections (29) in order to identify empty parking spaces (16) within the parking infrastructure (14).

2. Method according to Claim 1, wherein a position of an entrance (36) of the parking infrastructure (14) is determined, for example by means of measurement data from GPS sensors, and the path information (22) is adjusted to the position of the entrance (36) in such a way that the path information (22) begins at the position of the entrance (36).

3. Method according to either of Claims 1 and 2, wherein the path sections (28) are equalized on the basis of geometric regularities of multiple items of path information (22), wherein the points of maximum curvature (26) are defined as turning points with an angle and are used to equalize the path sections (28).

4. Method according to one of Claims 1 to 3, wherein changes of a parking space level are determined based on the identified occupied and empty parking spaces (16) along the path (22) of the at least one vehicle (2) and are taken into account when creating or updating the map.

5. Method according to one of Claims 1 to 4, wherein multiple items of path information (22) are combined with each other at points of maximum curvature (26).

6. Method according to one of Claims 1 to 5, wherein the determined geographical map and the identified free parking spaces (16) are provided for retrieval.

7. Method according to one of Claims 1 to 6, wherein determined environmental information (30, 32) from multiple vehicle sensors (4, 6, 8) are fused by calculating similarity measures.

8. Method according to one of Claims 1 to 7, wherein the path information (22) is determined by means of an odometry measurement (8) of the vehicle (2).

9. External server unit (12), wherein the external server unit (12) is configured to carry out all the steps of the method according to one of Claims 1 to 8.

10. System (1) having at least one vehicle (2) and having at least one external server unit (12) according to Claim 9, wherein the vehicle (2) has a vehicle sensor system (4, 6, 8) with at least one environment sensor (4, 6) and with at least one odometer (8), and wherein the vehicle (2) has a control unit (20) for receiving and evaluating sensor data from the vehicle sensor system (4, 6, 8).

## Revendications

1. Procédé d'établissement d'une carte d'au moins une infrastructure de stationnement (14) par une unité de serveur (12), des places de stationnement vacantes (16) étant enregistrées au sein de l'infrastructure de stationnement (14), dans lequel

   - des informations de chemin (6) et des informations d'environnement (30) déterminées par un système de capteurs de véhicule (2, 22, 8) d'au moins d'un véhicule (4) sont reçues par l'unité de serveur (12),
   - les informations de chemin (22) sont normalisées, l'information temporelle (t) étant supprimée pour produire des informations de chemin normalisées (22) qui se présentent dans un plan x-y bidimensionnel, et des points (26) de courbure maximale (Kr) sont déterminés dans les informations de chemin normalisées (22), la détermination de la courbure maximale (Kr) étant effectuée par balayage des informations de chemin (22) au moyen d'un cercle (K), un chemin de l'information de chemin (22) passant par un centre de cercle (M) et deux vecteurs (V1, V2) entre un point d'entrée (R1) du chemin dans le cercle (K) et le centre du cercle (M) et entre le centre du cercle (M) et un point de sortie (R2) du chemin hors du cercle (K) étant utilisés pour déterminer la courbure maximale (Kr), la courbure (Kr) étant déterminée sur la base de l'angle (a) entre les deux vecteurs (V1, V2),

- les informations de chemin normalisées (22) sont divisées en segments de chemin (24) à l'emplacement des points (26) de courbure maximale (Kr) , les informations de chemin (22) étant divisées en segments de chemin approximativement linéaires (24) qui sont délimités par les points (26) de courbure maximale (Kr),

- les segments de chemin (24) sont rectifiés par l'unité de serveur externe (12) pour la compensation d'erreurs et les segments de chemin rectifiés (29) sont utilisés pour créer ou mettre à jour une carte géométrique de l'infrastructure de stationnement (14), et

- à l'aide des informations d'environnement (30, 32) et des segments de chemin rectifiés (29), des places de stationnement occupées et vacantes (16) sont détectées le long du chemin afin de déterminer les places de stationnement vacantes (16) au sein de l'infrastructure de stationnement (14).

2. Procédé selon la revendication 1, dans lequel une position d'entrée (36) de l'infrastructure de stationnement (14) est déterminée, par exemple par des données de mesure de capteurs GPS, et les informations de chemin (22) sont ajustées à la position de l'entrée (36) de telle sorte que les informations de chemin (22) commencent à la position de l'entrée (36).

3. Procédé selon l'une quelconque des revendications 1 ou 2, dans lequel la rectification des segments de chemin (28) est effectuée sur la base de régularités géométriques de plusieurs informations de chemin (22), les points de courbure maximale (26) étant définis comme des points de changement de direction présentant un certain angle et utilisés pour rectifier les segments de chemin (28).

4. Procédé selon l'une quelconque des revendications 1 à 3, dans lequel, sur la base des places de stationnement occupées et vacantes (16) déterminées le long du chemin (22) d'au moins un véhicule (2), des changements de niveau de stationnement sont déterminés et pris en compte lors de la création ou de la mise à jour de la carte.

5. Procédé selon l'une quelconque des revendications 1 à 4, dans lequel plusieurs informations de chemin (22) sont combinées les unes aux autres à l'emplacement de points de courbure maximale (26).

6. Procédé selon l'une quelconque des revendications 1 à 5, dans lequel la carte géographique déterminée et les places de stationnement vacantes (16) déterminées sont mises à disposition pour être consultées.

7. Procédé selon l'une quelconque des revendications 1 à 6, dans lequel des informations d'environnement (30, 32) déterminées de plusieurs capteurs de véhicule (4, 6, 8) sont fusionnées par calcul de mesures de similitude.

8. Procédé selon l'une quelconque des revendications 1 à 7, dans lequel les informations de chemin (22) sont déterminées par une mesure d'odométrie (8) du véhicule (2).

9. Unité de serveur externe (12), l'unité de serveur externe (12) étant conçue pour exécuter toutes les étapes du procédé selon l'une quelconque des revendications 1 à 8.

10. Système (1) comprenant au moins un véhicule (2) et au moins une unité de serveur externe (12) selon la revendication 9, dans lequel le véhicule (2) comporte un système de capteurs de véhicule (4, 6, 8) comportant au moins un capteur d'environnement (4, 6) et au moins un odomètre (8), et dans lequel le véhicule (2) comporte un appareil de commande (20) pour recevoir et évaluer des données de capteur du système de capteurs de véhicule (4, 6, 8).

**Fig. 1**

EP 3 881 032 B1

**Fig. 2**

# Fig. 3

# Fig. 4

# Fig. 5

## Fig. 6

## Fig. 7

Fig. 8

# Fig. 9

Fig. 10

# Fig. 11

# EP 3 881 032 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3136054 A1